# EUROPÄISCHE PATENTANMELDUNG

(11) **EP 1 090 735 A2**
(43) Veröffentlichungstag der Anmeldung: **11.04.2001**
(21) Anmeldenummer: 00121548.2
(22) Anmeldetag: 30.09.2000
(51) Int. Cl.: B29C 51/16

(54) **Verfahren und Vorrichtung zum Thermoformen von Behältern**

(30) Priorität: 08.10.1999 DE 19948528
(71) Anmelder: ROBERT BOSCH GMBH, 70442 Stuttgart (DE)
(72) Erfinder: Mueller, Peter, 73557 Mutlangen (DE)

(57) **Zusammenfassung**

Die Erfindung betrifft ein Verfahren zum Thermoformen von Behältern (4) aus einem durch Erwärmung plastifizierbaren Materialstreifen (3) bei dem die Behälter (4) während des Thermoformens mit Etiketten (15) versehen werden können. Dies erfolgt mit folgenden Verfahrensschritten:
- Aufbringen eines Etiketts (15) für den zu formenden Behälter (4) auf einem Dorn (25) in einer Übernameposition (22a,22b) des Dornes (25),
- Bewegen des Dorns (25) in einen Formhohlraum (16) eines Formvorrichtungsteils (8a, 8b),
- Übertragen des Etiketts (15) von dem Dorn (25) auf eine Wandung des Formhohlraums (16),
- Verfahren des Formvorrichtungsteils (8a, 8b) in eine Arbeitsstellung (12) derart, daß ein plastifizierter Bereich des Materialstreifens (3) zwischen dem Formhohlraum (16) und einem in den Formhohlraum (16) einführbaren Stempel (17) zur Anordnung kommt,
- Formen des Behälters (4) durch Einführung des Stempels (17) in den Formhohlraum (16) und Bewegen des plastifizierten Bereichs des Materialstreifens (3) gegen das Etikett (15).

## Beschreibung

Die vorliegende Erfindung betrifft ein Verfahren und eine Vorrichtung zum Thermoformen von Behältern.

Bekannte thermogeformte Behälter eignen sich zur Aufnahme von verschiedenem Aufnahmegut, z.B. Lebensmitteln, wobei das Aufnahmegut flüssig fest oder pastös sein kann. Es handelt sich bei vorliegenden Behältern um ein typisches Massenprodukt, das möglichst schnell und kostengünstig herstellbar sein soll.

In der DE 195 24 555 A1 sind ein Verfahren und eine Vorrichtung zum Dekorieren von Behältern mittels Etiketten beschrieben, bei denen das Dekorieren in der Bewegungsrichtung eines Materialstreifens hinter der Vorrichtung zum Formen der Behälter direkt an den Behältern dadurch erfolgt, daß die Etiketten auf die Behälter aufgebracht und daran fixiert werden. Diese bekannte Vorrichtung ist von großer bzw. langer Bauweise, da ein Zuführungsträger in der Bewegungsrichtung des Materialstreifens hinter einer zugehörigen Formvorrichtung zum Formen der Behälter angeordnet ist. Ein weiterer Nachteil dieser bekannten Vorrichtung besteht darin, daß es einer besonderen Befestigungsmaßnahme der Etiketten am Behälter bedarf, z.B. durch Kleben, wobei ein besonderes Verbindungsmittel zum Verbinden der Etiketten mit den Behältern erforderlich ist.

Aus der DE 198 04 876 A1 sind ein Verfahren und eine Vorrichtung zur Wärmeformung von Behältern und zur Dekorbandanbringung an die Behälter zu entnehmen, wobei die Dekorbänder bzw. Etiketten von einer Rolle abgezogen und von unten in einen Formhohlraum zugeführt werden, bevor der Wärmeformvorgang stattfindet. Bei dieser bekannten Vorrichtung sind zwei in der Bewegungsrichtung eines Materialstreifens, aus dem die Behälter geformt werden, hintereinander angeordnete Blöcke mit mehreren Reihen Wärmeformkammern vorgesehen, in denen die Behälter in unterschiedlichen, in der Längsrichtung versetzten Längsabschnitten geformt werden, um Platz für die Zuführungsvorrichtungen für die Dekorbänder zu gewinnen.

Bei einer anderen, in der DE 198 04 876 A1 beschriebenen bekannten Vorrichtung sind zwei Formvorrichtungsteile bildende Formblöcke vorgesehen, die auf einer Trommel oder einem ähnlichen Äquivalent montiert sind. Zu einem gegebenen Zeitpunkt wird lediglich ein erster Formblock verwendet, um die Behälter wärmezuformen, während der zweite Block sich von der Wegstrecke des thermoplastischen Streifens entfernt befindet, was es ermöglicht, in den Wärmeformkammern dieses zweiten Formblocks Dekorbänder bereitzustellen. Beim anschließenden Schritt wird die Trommel betätigt, um den zweiten Formblock auf die Wegstrecke des Streifens zu fördern und zu positionieren und ihn dann dazu zu verwenden, Behälter wärmezuformen, während der erste Formblock seinerseits von dem thermoplastischen Streifen entfernt und mit Dekorbändern versehen wird. Diese bekannte Vorrichtung ist ebenfalls von großer und unzugänglicher Bauweise. Ferner wird die Zuführung der Dekorbänder in die Formblöcke, welches tangential über einen in den Formblöcken ausgebildeten Durchgang erfolgt, als aufwendig angesehen.

Der Erfindung liegt die Aufgabe zugrunde, ein Verfahren und eine Vorrichtung zum Thermoformen von Behältern zu schaffen, das bzw. die eine möglichst einfache Bestückung der Formvorrichtungsteile ermöglicht.

Diese Aufgabe wird durch ein Verfahren und eine Vorrichtung mit den Merkmalen des Patentanspruchs 1 bzw. 5 gelöst. Vorteilhaft Weiterbildungen der Erfindung sind in den Unteransprüchen beschrieben.

Bei dem erfindungsgemäßen Verfahren und bei der erfindungsgemäßen Vorrichtung werden die Dekorbänder bzw. Etiketten mittels einem verfahrbaren Dorn durch die Öffnung des Formhohlraums in diesen eingeführt und an der Wandung des Formhohlraums positioniert. Hierdurch ist ein einfaches, rationelles und sicheres Bestücken mit den Etiketten gewährleistet. Dabei trägt ein einfacher Zugang zu dem Formhohlraum zu einer störungsunanfälligen und sicheren Funktion bei. Außerdem führt die erfindungsgemäße Ausgestaltung zu einer einfachen Bauweise. Die Erfindung ermöglicht somit eine kostengünstige Herstellung sowohl der Behälter als auch der Vorrichtung. Außerdem werden die Etiketten jeweils schrumpfunabhängig an der Stelle der Behälterherstellung angebracht. Der plastifizierte Materialstreifen in Form einer Thermoformfolie wird direkt gegen bzw. in die bereitgestellten Etiketten geformt. Ein weiterer Vorteil besteht darin, daß nahezu jede beliebige geometrische Form von Behältern, z.B. zylindrisch oder konisch, mit einem Umschlingungswinkel von bis zu 360° dekoriert werden können. Die Haftung der z.B. aus Kunststoff oder Papier bestehenden Etiketten geschieht über den plastifizierten Kunststoff. Die Etiketten selber können zur Stabilisierung des Behälters beitragen, was eine Wertstoffeinsparung bezüglich der Materialdicke erlaubt. Im Rahmen der Erfindung können die Etiketten aus einem Magazin mit vorgefertigten Etiketten oder von einer Rolle entnommen

Die Merkmale der Ansprüche 2,3,6, 7, 11 und 12 ermöglichen eine Rationalisierung und Leistungssteigerung bei der Herstellung der Behälter, wobei das Thermoformen eines oder mehrerer Behälter und das Bestücken eines oder mehrerer Formhohlräume gleichzeitig stattfinden können

Die Weiterbildungen nach den Ansprüchen 4, 8 bis 10 und 13 bis 15 ermöglichen eine gute Ausnutzung des vorhandenen Raumes. Bei einer Anordnung eines Vorrats seitlich neben dem Materialstreifen steht dem Vorrat ein Freiraum zur Verfügung, ohne daß der Vorrat durch die Höhe der Vorrichtung begrenzt ist. Dabei ist zu berücksichtigen, daß der Anordnungsbereich unterhalb des Materialstreifens nicht nur durch Stützelemente der Vorrichtung beschränkt ist sondern auch durch wenigstens eine Heizvorrichtung für den Materialstreifen, die dem Formwerkzeug der Vorrichtung so vorgeordnet ist, daß der Materialstreifen erst zur Heizvorrichtung und dann zur Vorrichtung gelangt.

Bei diesen erfindungsgemäßen Ausgestaltungen steht somit nicht nur mehr Raum zur Verfügung, sondern der Vorrat ist auch übersichtlicher und besser zugänglich, z.B. für Wartungsarbeiten und Reparaturen. Dies gilt auch teilweise für wenigstens ein vorhandenes Zuführungssystem von Etiketten aus dem Vorrat. Die erfindungsgemäße Vorrichtung kann somit flach bzw. mit geringer Höhe ausgebildet werden. Dabei läßt sich auch die Zuführung verbessern und mit kürzeren Zuführungswegen realisieren, wobei sich eine schmale Baubreite der Vorrichtung und eine einfache und übersichtliche Anordnung der Formhohlräume erreichen läßt, die auch eine gute Zugänglichkeit bei einer Reparatur, einer Wartung und auch Bedienung ermöglicht.

Nachfolgend werden die Erfindung und weitere durch sie erzielbare Vorteile anhand von bevorzugten Ausführungsbeispielen näher erläutert. Es zeigt
- Figur 1: eine erfindungsgemäße Vorrichtung zum Formen von Behältern in schematischer Seitenansicht;
- Figur 2: Formvorrichtungsteile und Zuführungsträger der Vorrichtung nach Fig. 1 in einer Draufsicht;
- Figur 3: die Vorrichtung nach Figur 1 in einer anderen Funktionsstellung;
- Figur 4: die Vorrichtung in der Funktionsstellung nach Figur 3 in einer Draufsicht;
- Figur 5: die Vorrichtung in einer weiteren Funktionsstellung;
- Figur 6: die Vorrichtung in der Funktionsstellung nach Figur 5 in einer Draufsicht;
- Figur 7: die Vorrichtung in einer weiteren Funktionsstellung;
- Figur 8: die Vorrichtung in der Funktionsstellung nach Figur 7 in einer Draufsicht;
- Figur 9: die Vorrichtung in einer weiteren Funktionsstellung;
- Figur 10: die Vorrichtung in der Funktionsstellung nach Figur 9 in einer Draufsicht.

Die allgemein mit 1 bezeichnete Vorrichtung weist eine im einzelnen nicht dargestellte Führungs- und Fördereinrichtung 2 für einen Materialstreifen 3 auf, aus dem sich in einer oder in mehreren Reihen Behälter 4 einstückig formen lassen, und zwar vorzugweise durch ein sogenanntes Thermoformen. Es handelt sich um einen Streifen 3 entsprechend geringer Dicke aus thermoplastischem Kunststoff, der sich bei Erwärmung entsprechend einstückig verformen läßt. Die Dicke des Streifens 3 kann z.B. etwa o,2 mm bis o,5 mm betragen. Der Streifen 3 wird im Funktionsbetrieb der Vorrichtung 1 schrittweise um eine bestimmte Schrittlänge vorbewegt, wobei er eine Durchgangsebene E1 und eine sich in dieser erstreckende Durchgangsrichtung 5 definiert, die durch einen Pfeil verdeutlicht ist. Beim vorliegenden Ausführungsbeispiel erstrecken sich die Durchgangsebene E und die Durchgangsrichtung 5 horizontal. Im Rahmen der Erfindung sind jedoch auch andere Richtungen möglich.

Zum Formen der Behälter 4 ist eine Formvorrichtung 6 mit einem ersten Formvorrichtungteil 7 und zwei mit letzerer zusammenwirkenden Formvorrichtungsteilen 8a,8b vorgesehen, die jeweils durch eine Fördervorrichtung 9,11 zwischen einer Arbeitsposition 12, in der sie mit dem ersten Formvorrichtungsteil 7 zwecks Formung eines Behälters 4 zusammenwirken, einer Freigabeposition 13 und einer Übernahmeposition 14a,14b für Etiketten 15 bewegbar sind.

Das erste Formvorrichtungsteil 7 ist stationär auf einer Seite der Durchgangsebene E1, hier oberhalb dieser, angeordnet, während die zweiten Formvorrichtungsteile 8a,8b bewegbar auf der gegenüberliegenden Seite, hier unterhalb der Durchgangsebene E1, angeordnet sind. Jedes Formvorrichtungsteil 8a,8b weist wenigstens einen Formhohlraum 16 auf, dessen Form und Größe der Außenform und -größe der darin zu formenden Behälter 4 entspricht. Die Formvorrichtungsteile 8a,8b sind jeweils mit der zugehörigen Fördervorrichtung 9,11 so verstellbar, daß dann, wenn das eine Formvorrichtungsteil sich in der Arbeitsposition 12 befindet, das andere Formvorrichtungsteil sich auf seinem Förder- bzw. Verstellweg, z. B. in seiner Übernahmeposition, befindet. In der Arbeitsposition 12 ist das jeweilige Formvorrichtungsteil 8a bzw. 8b so positioniert, daß dem Formhohlraum 16 ein Vorformstempel 17 gegenüberliegt, der wenigstens teilweise in den Formhohlraum 16 hinein bewegbar ist, was noch beschrieben wird.

Die Vorrichtung 1 weist ein Zuführsystem 18 auf, mit dem in der Übernahmeposition 14a,14b des jeweiligen Formvorichtungsteils 8a,8b der Formhohlraum 16 mit wenigstens einem Etikett 15 bestückbar ist, das vorher von einem Vorrat 19 für Etiketten 15 entnommen worden ist.

Das Zuführsystem 18 kann wenigstens einen Zuführungsträger für Etiketten 15 aufweisen, der zwischen dem Vorrat 19, an der er ein Etikett 15 aus dem Vorrat entnimmt, und einer Übergabeposition bewegbar ist, in der er das Etikett 15 in den Formhohlraum 16 abgibt. Der Zuführungsträger kann auch zwischen der vorgenannten Übergabeposition und einer Übernahmeposition bewegbar sein, in der ihm das Etikett 15 durch eine Übergabevorrichtung übergeben wird, die zwischen dem Vorrat und der Übernahmeposition wirksam ist und dabei gegebenenfalls zwischen diesen beiden Positionen bewegbar sein kann.

Beim vorliegenden Ausführungsbeispiel sind zwei Zuführungsträger 21a,21b für Etiketten 15 und zwei Vorräte 19a,19b vorgesehen, von denen der eine Zuführungsträger 21a zwischen dem Vorrat 19a oder einer Übernahmeposition 22a und einer Übergabeposition 23a bewegbar ist, in der eine Übergabe des Etiketts 15 in den Formhohlraum 16 des zugehörigen Formvorrichtungsteils 8a stattfinden kann, und der andere Zuführungsträger 21b zwischen dem Vorrat 19b oder einer Übernahmeposition 22b und einer Übergabeposition 23b bewegbar ist, in der eine Übergabe des Etiketts 15 in den Formhohlraum 16 des hier zugehörigen Formvorrichtungsteils 8b erfolgen kann. Im Rahmen der Erfindung können die Zuführungsträger 21a, 21b in ihren Übernahmepositionen 22a, 22b so angeordnet sein, daß sie die Etiketten 15 jeweils direkt aus dem Vorrat 19a, 19b entnehmen können, oder ihnen die Etiketten 15 übertragen werden. Es ist jedoch auch möglich und beim vorliegenden Ausführungsbeispiel vorgesehen, zwischen dem Vorrat 19a, 19b und der Übernahmeposition 22a, 22b jeweils eine Übergabevorrichtung 24a, 24b wirksam oder bewegbar anzuordnen, mit denen die Etiketten 15 vom Vorrat 19a, 19b auf die Zuführungsträger 21a, 21b übertragen werden, die dann die Etiketten 15 zu den Formhohlräumen 16 führen.

Beim vorliegenden Ausführungsbeispiel werden die Zuführungsträger 21a,21b jeweils durch wenigstens einen Dorn 25 gebildet, der an einer sich quer zu ihm erstreckenden Dornplatte 25a gehalten sein kann und der das zugehörige Etikett 15 direkt vom Vorrat 19a oder von der zugehörigen Übergabevorrichtung 24a, 24b übernimmt und an den Formhohlraum 16 übergibt, und der vorzugsweise an die Form und Größe des Formhohlraums 16 in etwa angepaßt ist und in den Formhohlraum 16 hinein bewegbar ist zwecks Abgabe des Etiketts 15.

Den Zuführungsträgern 21a,21b bzw. Dornen 25, den Übergabevorrichtungen 24a, 24b und den Formhohlräumen 16 ist jeweils ein Mittel als Haltevorrichtung (nicht dargestellt) zum lösbaren Halten des zugehörigen Etiketts 15 zugeordnet. Hierbei kann es sich jeweils z. B. um wenigstens einen Saugkanal handeln der an der Fläche ausmündet, an der das Etikett 15 anliegt und getragen wird, z. B. an der Innenmantelfläche des Formhohlraums 16 oder Außenmantelfläche des Wickeldornes 25. Die Saugwirkung der Saugkanäle bzw. der darin vorhandene Unterdruck wird durch eine Steuereinrichtung so gesteuert, daß das Etikett 15 jeweils zu den richtigen Zeitpunkten gehalten und losgelassen wird. Hierbei kann es sich jeweils um eine Saugvorichtung für Etiketten handeln, wie sie in der US 5 614 146 an sich beschrieben ist, worauf Bezug genommen wird. In dem Fall, in dem wenigstens eine andeutungsweise dargestellte Übergabevorrichtung 24a, 24b vorhanden ist, kann diese ebenfalls mit einer vorbeschriebenen pneumatischen Haltevorrichtung ausgebildet sein.

Die Etiketten 15 können von unterschiedlicher Form und unterschiedlichem Material sein. Ein bevorzugtes Etikettenmaterial ist Papier oder ebenfalls thermoplastischer Kunststoff, wobei die Etiketten 15 jeweils durch einen Film gebildet sein können. Im Rahmen der Erfindung können die Etiketten 15 sich über einen Umfangswinkel des Behälters 4 erstrecken, der bis 360° betragen kann.

Im Rahmen der Erfindung können im weiteren jeweils mehrere Behälter 4 in mehreren Formhohlräumen 16 gleichzeitig geformt werden, die vorzugsweise in einer oder mehreren Längsreihen oder in einer oder mehreren quer zur Durchgangsrichtung 5 verlaufenden Querreihen angeordnet sind. In der gleichen Anzahl, hier jeweils sechs bzw. zwölf Stück, sind auch der oder die Vorräte 19a, 19b vorgesehen an dem oder an denen die Etiketten 15 jeweils von einer Vorratsrolle abziehbar und abtrennbar sind oder als fertig zugeschnittene Etiketten 15 in jeweils einem Magazin vorliegen. Insbesondere dann, wenn ein oder mehrere Formhohlräume 16 nur in einer Querreihe angeordnet sind, braucht nur ein Vorrat 19 oder eine entsprechende Vorratsreihe vorgesehen zu sein, von dem bzw. denen die Etiketten 15 mit den Zuführungsträgern 21a, 21b direkt abgenommen werden können oder von dem bzw. denen die Etiketten mit einer Übergabevorrichtung 24a, 24b den Zuführungsträgern 21a, 21b an den Übernahmepositionen 22a, 22b übergeben werden können. Insbesondere dann, wenn ein oder mehrere Formhohlräume 16 in zwei Querreihen angeordnet sind, ist es vorteilhaft, ein oder mehrere Vorräte 19a, 19b zu beiden Seiten der Übernahmeposition 22a, 22b und zwei Übergabevorrichtungen 24a, 24b vorzusehen, die vorzugsweise jeweils zwischen dem Vorrat und der Reihe Formhohlräume 16 wirksam oder bewegbar sind, die jeweils auf der dem oder den Vorräten zugewandten Seite der Zuführungsträger 21a, 21b bewegbar sind.

Nachfolgend wird die Funktion der Vorrichtung 1 beschrieben.

Der Vorrichtung 1 ist wenigstens eine Heizvorrichtung 26 vorgeordnet, so daß der in einer Funktionsebene E1 angeordnete Streifen 3 in der Durchgangsrichtung 5 zunächst zur Heizvorrichtung 26 und dann zur Vorrichtung 1 gelangt. Die Heizvorrichtung 26 kann zu beiden Breitseiten des Streifens 3 angeordnete Heizvorrichtungsteile aufweisen. Unterhalb des unteren Heizvorrichtungsteils ist ein Freiraum vorgesehen, der von dem Zuführsystem 18 bzw. dem Zuführungsträger 14a bei dessen Bewegung ausgenutzt wird. Der erwärmte Streifen 3 wird jeweils um ein Schrittmaß b vorbewegt, das dem Abstand zwischen zwei Formhohlräumen 16 in der Durchgangsrichtung entspricht, wobei ein erwärmter Streifenbereich zwischen die Formvorrichtungsteile 7 einerseits und 8a, 8b andererseits gelangt. Dann erfolgt das Thermoformen in dem oder den Formhohlräumen 16, wobei beim vorliegenden Ausführungsbeispiel zwölf Behälter 4 gleichzeitig in den Formhohlräumen 16 geformt werden. Hierbei kann der oder können die in entsprechender Anzahl vorgesehenen Vorformstempel 17 Verformungshilfe dadurch leisten, daß sie teilweise in den oder die Formhohlräume 16 hineinbewegt werden und dabei den bzw. die Behälter 4 vorformen.

Beim Formen des jeweiligen Behälters 4 wird die Behälterwand gegen die Formfläche des jeweiligen Formhohlraums 16 bewegt, was in an sich bekannter Weise durch Unterdruck unterstützt werden kann. Bei diesem Thermoformen wird ein vorher in den Formhohlraum 16 eingeführtes Etikett 15 durch den Warmkontakt fest mit der Außenfläche des Behälters 4 verbunden, ohne daß es zusätzlicher Befestigungsmaßnahmen bedarf. Nach Beendigung des Thermoformens, werden die Vorformstempel 17 nach oben entfernt und das zugehörige Formvorrichtungsteil 8a bzw. 8b in die Freigabeposition 13 in einer Funktionsebene E2 bewegt.

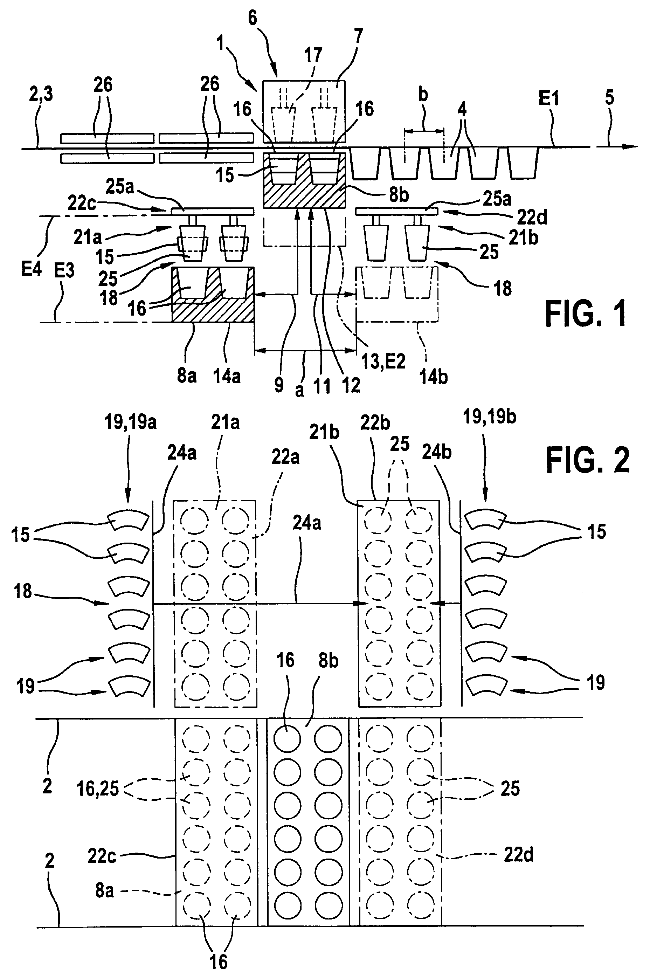

In der Funktionsstellung nach Figur 1 können bei diesem Form- und auch Entformvorgang im Formvorrichtungsteil 8b die Formhohlräume 16 des Formvorrichtungsteils 8a mit Etiketten 15 bestückt werden, wobei der Zuführungsträger 21a bei diesem Formvorgang bestückt werden kann oder beim vorherigen Formvorgang bestückt worden sein kann. Dies gilt auch für den Zuführungsträger 21b.

Entsprechendes gilt auch dann, wenn das Formvorrichtungsteil 8b in seine Übernahmeposition 14b bewegt worden ist und das Formvorrichtungsteil 8a sich in seiner Arbeitsposition 12 befindet, wobei der Formvorgang stattfinden kann, während die Formhohlräume 16 des Formvorrichtungsteils 8b mit Etiketten 15 bestückt werden können, und wobei der zugehörige Zuführungsträger 21b während dieses Formvorgangs oder beim vorherigen Formvorgang mit Etiketten 15 bestückt werden kann.

Bei der Funktionsstellung gemäß Figur 1 bzw. 2 befindet sich das Formvorrichtungsteil 8b in der Funktionsebene E1. Das Formvorrichtungsteil 8a befindet sich in der Funktionsebene E3. Der Zuführungsträger 21a befindet sich in der Funktionsebene E4 in einer Übergabebereitschaftsposition 22c, wobei er sich auch in seiner Übernahmeposition 22a befinden kann, wie es Figur 2 andeutungsweise zeigt. Der Zuführungsträger 21b befindet sich in seiner Übernahmeposition 22b, wobei er sich auch in seiner Übergabebereitschaftsposition 23d befinden kann, wie es angedeutet ist.

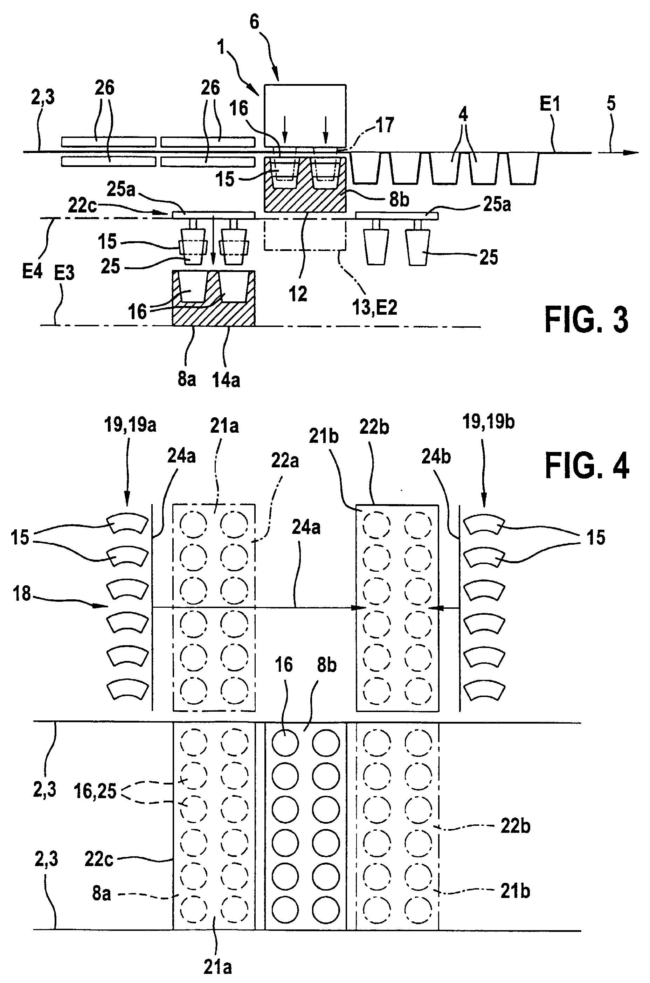

Die Figuren 3 und 4 zeigen die Vorrichtung 1 während des Thermoformens, wobei gegebenenfalls vorhandene Vorformstempel 17 in die Formhohlräume 16 eingeführt sein können. Der Zuführungsträger 21a befindet sich mit Etiketten 15 in einer Funktionsebene 4 in seiner Übergabebereitschaftsposition 22c. Der Zuführungsträger 21b befindet sich in der Funktionsebene E4 in seiner Übernahmeposition 22b, wobei er sich auch in seiner Übernahmebereitschaftsposition 22d befinden kann, wie es angedeutet ist, wobei er mit Etiketten 15 bestückt worden ist.

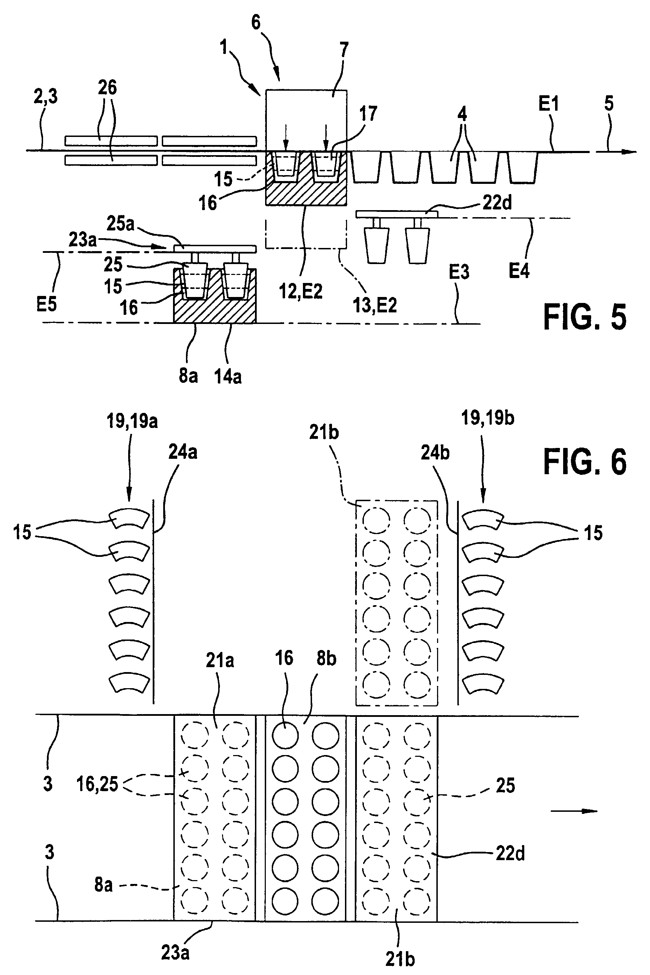

Die Figuren 5 und 6 zeigen die Vorichtung 1 in einer Funktionsstellung, in der sich der Zuführungsträger 21a in seiner Übergabeposition 23a in einer Funktionsebene E5 befindet, in der er in die Formhohlräume 16 eintaucht. Der Zuführungsträger 21b kann sich in seiner Übergabebereitschaftsstellung 22d oder in seiner Übernahmestellung 22b befinden.

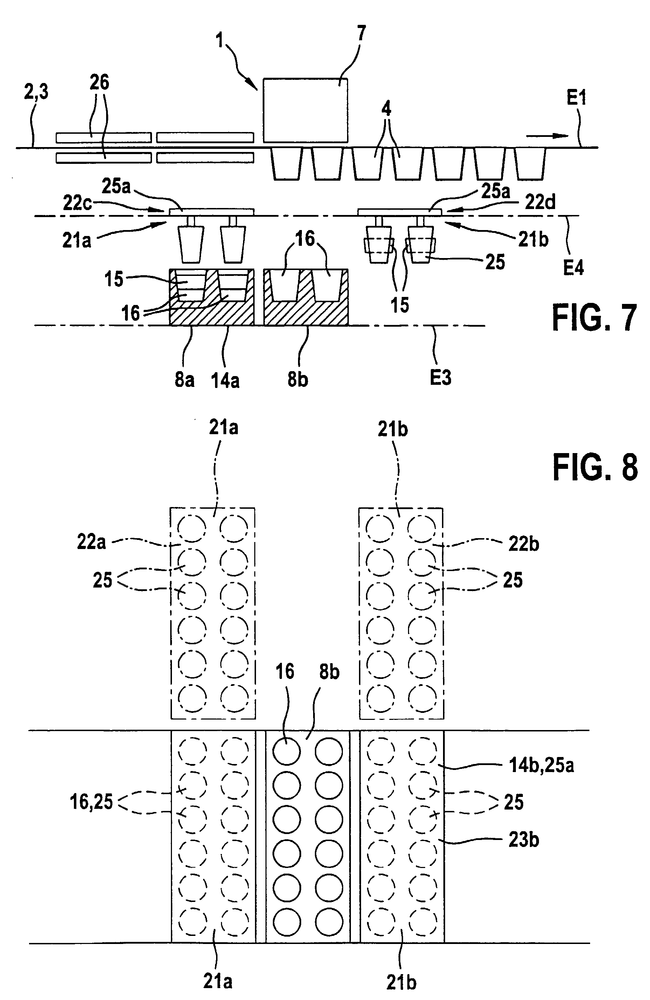

Die Figuren 7 und 8 zeigen die Vorrichtung 1 in einer Funktionsstellung, in der der Zuführungsträger 21a wieder in die Funktionsebene E4 bewegt worden ist und der Zuführungsträger 21b sich in der Funktionsbene E4 in seiner Übergabebereitschaftsposition 22d befinden kann. Das Formvorrichtungsteil 8b befindet sich zwischen einem vertikal nach unten bewegten Bewegungsabschnitt und vor einer horizontalen Bewegung in die Übernahmeposition 14b.

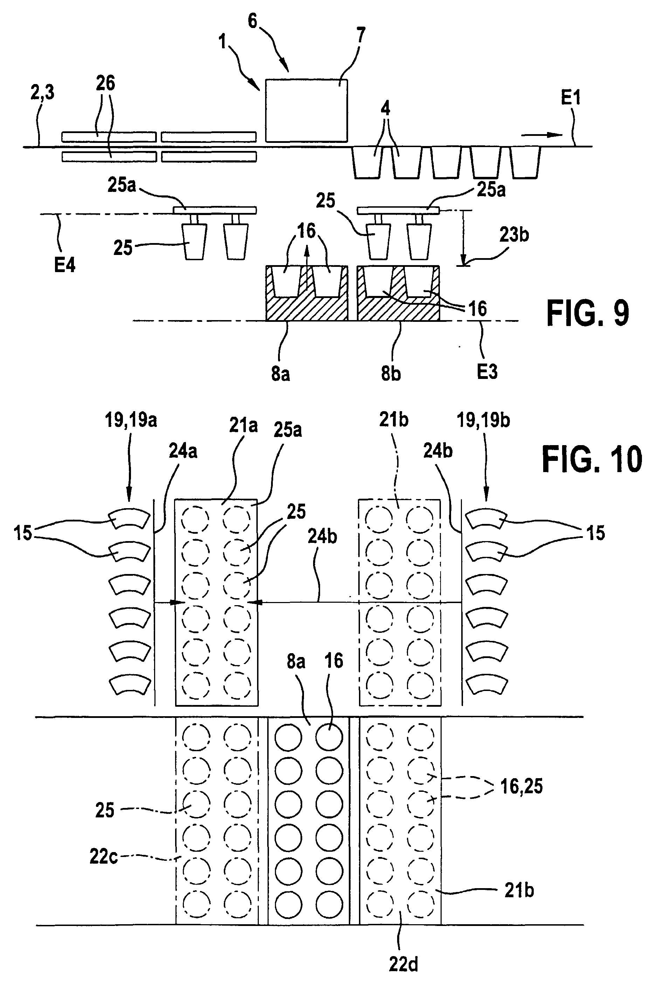

In der Funktionsstellung gemäß Figur 9 und 10 befindet sich das Formvorrichtungsteil 8a in der vorgenannten Zwischenposition in der es in der Ebene E3 horizontal unter das Formvorrichtungsteil 7 bewegt worden ist und in der es vertikal nach oben in die Arbeitsstellung 12 bewegbar ist. Der Zuführungsträger 21a befindet sich in seiner Übernahmeposition 22a, in der seine hintere Reihe Formhohlräume 16 direkt oder mittels der zugehörigen Übergabevorrichtung 24a mit Etiketten 15 bestückbar ist, und dessen vordere Reihe Formhohlräume 16 mittels der Übergabevorrichtung 24b vom vorderen Vorrat 19b mit Etiketten 15 bestückbar ist. Der Zuführungsträger 21b befindet sich noch in seiner dargestellten Übergabebereitschaftsposition 22d, aus der er in seine Übergabeposition 23b bewegt werden kann.

Die Vorrichtung kann in eine Füll- und gegebenenfalls auch Verschließvorrichtung für die Behälter 4, z. B. durch Versiegeln mit einer Deckelfolie, integriert sein.

Die noch am Streifen 3 anhängenden Behälter 4 können hinter der Vorrichtung 1 oder hinter der Verschließvorrichtung vom Reststreifen getrennt werden, z.B. durch Ausstanzen.

## Patentansprüche

1. Verfahren zum Thermoformen von Behältern (4) aus einem durch Erwärmung plastifizierbaren Materialstreifen (3), mit folgenden Schritten:
- Aufbringen eines Etiketts (15) für den zu formenden Behälter (4) auf einem Dorn (25) in einer Übernahmeposition (22a,22b) des Dornes (25),
- Bewegen des Dorns (25) in einen Formhohlraum (16) eines Formvorrichtungsteils (8a, 8b),
- Übertragen des Etiketts (15) von dem Dorn (25) auf eine Wandung des Formhohlraums (16),
- Verfahren des Formvorrichtungsteils (8a, 8b) in eine Arbeitsstellung (12) derart, daß ein plastifizierter Bereich des Materialstreifens (3) zwischen dem Formhohlraum (16) und einem in den Formhohlraum (16) einführbaren Stempel (17) zur Anordnung kommt,
- Formen des Behälters (4) durch Einführung des Stempels (17) in den Formhohlraum (16) und Bewegen des plastifizierten Bereichs des Materialstreifens (3) gegen das Etikett (15).

2. Verfahren nach Anspruch 1, dadurch gekennzeichnet, daß zwei Formvorrichtungsteile (8a, 8b) verwendet und derart verfahren werden, daß während der Aufbringung des Etiketts (15) auf die Wandung des Formhohlraums (16) des einen Formvorrichtungsteils oder beim Verfahren dieses Formvorrichtungsteils in eine Position, in der das Etikett (15) auf die Wandung aufgebracht wird, das Thermoformen eines Behälters (4) im anderen Formvorrichtungsteil durchführbar ist.

3. Verfahren nach Anspruch 1 oder 2, dadurch gekennzeichnet, daß bei Verwendung mehrerer Dorne (25) und Formvorrichtungsteile (8a,8b) mit mehreren Formhohlräumen (16) jeweils gleichzeitig mehrere Etiketten (15) auf die Dorne (25) aufgebracht und mehrere Behälter (4) thermogeformt werden.

4. Verfahren nach einem der vorstehenden Ansprüche, dadurch gekennzeichnet, daß der oder die Dorne (25) jeweils in eine seitlich neben dem Materialstreifen (3) befindliche Übernahmeposition verfahren wird bzw. werden, in der ihm bzw. ihnen das Etikett (25) bzw. die Etiketten (15) von einem gemeinsamen oder einem jeweils zugehörigen Mittel (19a,19b) zur Lagerung von Etiketten (15) übertragen wird bzw. werden.

5. Vorrichtung, insbesondere zur Durchführung eines Verfahrens nach einem der vorstehenden Ansprüche, mit
- Mitteln (19) zur Lagerung von Etiketten (15),
- einem verfahrbaren Dorn (25),
- Mitteln zum Positionieren des Etiketts (15) an dem Dorn (25),
- einem einen Formhohlraum (16) aufweisendes Formvorrichtungsteil (8a, 8b),
- Mitteln zur Übertragung des Etiketts (15) von dem Dorn (25) auf eine Wandung des Formhohlraums (16),
- einem mit dem Formhohlraum (16) zusammenwirkenden Stempel (17),
- Mitteln zum Verfahren des Formvorrichtungsteils (8a, 8b) in eine Arbeitsstellung (12), in der ein plastifizierter Bereich eines Materialstreifens (3) zwischen dem Formhohlraum (16) und dem Stempel (17) zur Anordnung kommt,
- Mitteln zum Bewegen des Stempels (17) in den Formhohlraum (16) und
- Mitteln zum Bewegen des plastifizierten Bereichs des Materialstreifens (3) gegen die Wandung des Formhohlraums (16) und/oder gegen die Innenfläche des Etiketts (15).

6. Vorrichtung nach Anspruch 5, dadurch gekennzeichnet, daß zwei Formvorrrichtungsteile (8a,8b) vorgesehen und so wechselweise in die Arbeitsstellung (12) verfahrbar sind, daß dann, wenn das eine Formvorrichtungsteil sich in der Arbeitsstellung (12) befindet, dem anderen Formvorrichtungsteil ein Etikett (15) in den Formhohlraum (16) übertragbar ist.

7. Vorrichtung nach Anspruch 6, dadurch gekennzeichnet, daß jedem Formvorichtungsteil (8a,8b) ein verfahrbarer Dorn (25) zugeordnet ist.

8. Vorrichtung nach einem der Ansprüche 5 bis 7, dadurch gekennzeichnet, daß das oder die Formvorrichtungsteile (8a,8b) in einer sich längs und rechtwinklig zum Materialstreifen (3) erstreckenden Ebene verfahrbar ist bzw. sind.

9. Vorrichtung nach einem der Ansprüche 5 bis 8, dadurch gekennzeichnet, daß die Mittel (19) zur Lagerung der Etiketten (15) seitlich neben dem Materialstreifen (3) angeordnet sind.

10. Vorrichtung nach einem der vorstehenden Ansprüche, dadurch gekennzeichnet, daß der oder die Dorne (25) quer zum Materialstreifen verfahrbar sind.

11. Vorrichtung nach einem der vorstehenden Ansprüche 5 bis 19, dadurch gekennzeichnet, daß zwei Mittel (19a, 19b) zur Lagerung von Etiketten (15) vorgesehen sind, vorzugsweise auf ein und derselben Seite bezüglich des Materialstreifens (3).

12. Vorrichtung nach einem der vorstehenden Ansprüche, dadurch gekennzeichnet, daß das Formvorrichtungsteil (16) oder die Formvorrichtungsteile (8a, 8b) jeweils mehrere Formhohlräume (16) aufweisen und vorzugsweise jedem Formhohlraum (16) ein verfahrbarer Dorn (15) zugeordnet ist.

13. Vorrichtung nach Anspruch 12, dadurch gekennzeichnet, daß die Formhohlräume (16) und die Dorne (25) in einer oder mehreren längs und/oder quer verlaufenen Reihen angeordnet sind.

14. Vorrichtung nach einem der Ansprüche 9 bis 13, dadurch gekennzeichnet, daß das bezüglich der Durchgangsrichtung (5) hintere Mittel (19a) zum Lagern der Etiketten (15) hinter dem hinteren Dorn (25) in dessen Übernahmeposition für Etiketten (15) und das vordere Mittel (19b) zum Lagern von Etiketten (15) vor dem vorderen Dorn (15) in dessen Übernahmeposition für Etiketten (15) angeordnet sind.

15. Vorrichtung nach einem der vorstehenden Ansprüche, dadurch gekennzeichnet, daß zwischen dem Vorrat (19) oder zwischen den Vorräten (19a, 19b) und dem Zuführsystem (18) oder den Zuführungsträgern (21a, 21b) in deren Übernahmeposition (21a,21b) jeweils eine Übergabevorrichtung (24a, 24b) wirksam oder bewegbar ist.
